(19) Europäisches Patentamt
European Patent Office
Office européen des brevets

(11) **EP 2 486 370 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(21) Anmeldenummer: **10754754.9**

(22) Anmeldetag: **20.09.2010**

(51) Int Cl.:
*G01C 15/00* *(2006.01)*    *G01C 25/00* *(2006.01)*
*G01S 17/36* *(2006.01)*    *G01S 17/32* *(2006.01)*
*G01S 7/497* *(2006.01)*

(86) Internationale Anmeldenummer:
**PCT/EP2010/063774**

(87) Internationale Veröffentlichungsnummer:
**WO 2011/042290 (14.04.2011 Gazette 2011/15)**

(54) **OPTISCHES ENTFERNUNGSMESSGERÄT MIT KALIBRIERUNGSEINRICHTUNG**

OPTICAL DISTANCE MEASURING DEVICE WITH CALIBRATION DEVICE

TÉLÉMÈTRE OPTIQUE AVEC DISPOSITIF D'ÉTALONNAGE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **05.10.2009 DE 102009045323**

(43) Veröffentlichungstag der Anmeldung:
**15.08.2012 Patentblatt 2012/33**

(73) Patentinhaber: **Robert Bosch GmbH**
**70442 Stuttgart (DE)**

(72) Erfinder:
• **EISELE, Andreas**
**70771 Leinfelden-Echterdingen (DE)**
• **WOLST, Oliver**
**72622 Nuertingen (DE)**
• **SCHMIDTKE, Bernd**
**71229 Leonberg (DE)**

(56) Entgegenhaltungen:
**US-A1- 2007 182 949     US-B1- 7 486 386**
**US-B2- 7 417 718**

**Beschreibung**

GEBIET DER ERFINDUNG

Die Erfindung betrifft eine Messvorrichtung zur Messung einer Entfernung zwischen der Messvorrichtung und einem Zielobjekt mit Hilfe optischer Strahlung. Eine solche Messvorrichtung wird auch als optisches Entfernungsmessgerät bezeichnet und kann als separates, beispielsweise handgehaltenes Gerät oder in einer anderen Vorrichtung, beispielsweise einem Werkzeug, vorgesehen sein. Insbesondere betrifft die Erfindung ein optisches Entfernungsmessgerät, das mit einer Kalibrierungseinrichtung ausgestattet ist, um eine Messgenauigkeit des Entfernungsmessers durch Kalibrieren einer eigentlichen Entfernungsmessung erhöhen zu können.

HINTERGRUND DER ERFINDUNG

Es sind optische Entfernungsmessgeräte bekannt, die einen zeitlich modulierten Lichtstrahl in Richtung auf ein Zielobjekt hin, dessen Abstand zu dem Messgerät ermittelt werden soll, ausrichten. Von dem angepeilten Zielobjekt reflektiertes oder rückgestreutes, rücklaufendes Licht wird von dem Messgerät zumindest teilweise detektiert und zur Ermittlung der zu messenden Entfernung verwendet. Ein typischer Messbereich liegt hierbei bei Entfernungen von wenigen Zentimetern bis zu mehreren hundert Metern.

Aus der US 2007/0182949 A1 ist ein Entfernungsmessgerät bekannt, das eine Lichtquelle zum Beleuchten des Zielobjekts unter Verwendung kontinuierlich modulierten Lichts, einen Festkörperbildsensor, der ein Array aus Lawinenfotodioden aufweist, und eine Mehrzahl von Schaltkreisen zum Verarbeiten von Signalen, die von den Lawinenfotodioden ausgegeben wurden, aufweist, um Daten bereitzustellen, die von dem von dem Zielobjekt auf die Fotodioden reflektierten Licht abhängen. Die Schaltkreise weisen einen Multiplexer auf, der dazu ausgelegt ist, von den Lawinenfotodioden ausgegebene Signale während verschiedener Unter-Perioden in verschiedenen Speichereinrichtungen zu akkumulieren.

Die als Photonenzähler dienenden Lawinenfotodioden empfangen hierbei das vom Zielobjekt rückreflektierte Licht sowie zusätzlich vorhandene Hintergrundstrahlung und erzeugen an ihrem Ausgang jeweils elektrische Impulse, wobei die zeitliche Impulsdichte mit der auftreffenden Lichtleistung korreliert. Das Auslesen der Impulse von den Lawinenfotodioden erfolgt mit Hilfe einer Multiplexer-Anordnung. Diese kann synchron mit einer Modulation eines als Lichtquelle eingesetzten Lasers derart betrieben werden, dass die Impulse der Lawinenfotodioden in Abhängigkeit vom Zeitpunkt der jeweiligen Detektionsereignisse, das heißt beispielsweise eines in der Lawinenfotodiode absorbierten Photons, unterschiedliche digitale Zähler inkrementieren. Eine zeitliche Periode, mit der die Lichtquelle das Zielobjekt moduliert beleuchtet, wird dabei in eine Mehrzahl von Unter-Perioden unterteilt. Es wird eine der Anzahl von Unter-Perioden entsprechende Anzahl von digitalen Zählern bereitgestellt, wobei während jeder Unter-Periode jeweils ein entsprechend zugeordneter digitaler Zähler entsprechend der während der Unter-Periode empfangenen Detektionsimpulse inkrementiert wird. Auf diese Weise können über eine Messzeit Detektionsereignisse kumuliert werden. Während eine einzelne Periode beispielsweise Zeitdauern im Bereich von Nanosekunden aufweisen kann, kann die gesamte Messzeit viele solche Perioden umfassen und beispielsweise mehrere Millisekunden oder mehrere Sekunden dauern. Durch Kumulieren der Messereignisse in den digitalen Zählern kann eine Art Histogramm der Detektionsereignisse bezogen auf das zeitliche Auftreten von Detektionsereignissen innerhalb von Unter-Perioden aufgenommen werden. Sobald eine dem von der Lichtquelle abgestrahlten modulierten Licht aufgeprägte Modulation in den Zählerständen der digitalen Zähler mit ausreichender statistischer Genauigkeit vorliegt, kann über eine Phasenauswertung auf eine Laufzeit des Lichts zwischen Aussendung und Detektion und damit auf einen Abstand zwischen dem Entfernungsmessgerät und dem Zielobjekt geschlossen werden. Ein solches Prinzip einer Laserentfernungsmessung ist allgemein unter der Bezeichnung "Time of Flight Ranging" beispielsweise mit kontinuierlicher oder gepulster Modulation der Intensität des Laserstrahls bekannt.

**Neue Beschreibungsseite 3 (Reinschrift)**

Eine in dieser Weise arbeitende Auswerteeinrichtung, die innerhalb eines Entfernungsmessgerätes Detektionssignale von einem lichtempfindlichen Detektor empfängt und auswertet, indem sie die Detektionssignale mit einer Referenz synchronisiert registriert, das heißt entsprechend ihrem zeitlichen Auftreten bezogen auf die Periodizität des verwendeten modulierten Messlichts akkumuliert, wird auch als sogenannte "Binning-Architektur" bezeichnet. Eine derartige Binning-Architektur lässt sich beispielsweise mit einer Delay Locked Delay Line (DLL) realisieren.

Es wurde beobachtet, dass Entfernungsmessgeräte, die beispielsweise in der oben beschriebenen Art basierend auf Photonenzählern, Multiplexer-Anordnungen und Binning-Architekturen arbeiten, nicht immer zufriedenstellende Messgenauigkeiten liefern können.

In der Schrift US 7,486,386 B1 ist eine Möglichkeit, eine Messgenauigkeiten zu erhöhen, aufgezeigt.

OFFENBARUNG UND MÖGLICHE AUSFÜHRUNGSFORMEN DER ERFINDUNG

Es kann daher ein Bedarf an einem Entfernungsmessgerät bestehen, bei dem eine Messgenauigkeit und insbesondere eine Zuverlässigkeit einer Messgenauigkeit verbessert ist.

Ein solcher Bedarf kann mit einer Messvorrichtung gemäß Anspruch 1 erfüllt werden. Weitere Ausgestaltungen der Messvorrichtung sind in den abhängigen Ansprüchen angegeben.

Aspekte der vorgeschlagenen Messvorrichtung können als auf den folgenden Erkenntnissen und Ideen beruhend angesehen werden:

Es wurde als eine mögliche Quelle für Messfehler bzw. Messungenauigkeiten beispielsweise bei dem oben beschrieben Entfernungsmessgerät erkannt, dass ein Messergebnis stark von zeitlichen Längen der Unter-Perioden, in die die Gesamt-Periode des modulierten Messlichts unterteilt wird und während derer Detektionssignale durch Inkrementieren eines zugeordneten Zählers akkumuliert werden, beeinflusst sein kann. Unterschiedliche Längen der Unter-Perioden können, insbesondere wenn die Längenunterschiede zufällig begründet und nicht bekannt sind, als systembedingte Fehlerquellen wirken und systematische Fehler bei der Ermittlung eines zu messenden Abstandes hervorrufen. Solche systematischen Fehler sind von rauschbedingten Fehlern grundsätzlich zu unterscheiden, da sie sich nicht durch längere Messzeiten, sondern regelmäßig nur mit Hilfe einer genaueren Kalibrierung des Entfernungsmessgerätes verringern lassen.

Es wird daher ein Entfernungsmessgerät vorgeschlagen, das zusätzlich eine Kalibrierungseinrichtung aufweist, mit Hilfe derer das Messgerät in vorteilhafter Weise kalibriert werden kann.

Die vorgeschlagene Messvorrichtung zur optischen Entfernungsmessung weist dabei eine Sendeeinrichtung zur Aussendung von periodisch modulierter optischer Messstrahlung auf ein Zielobjekt hin, eine Empfangseinrichtung zur Detektion von von dem Zielobjekt zurücklaufender optischer Messstrahlung und eine Auswerteeinrichtung zum Empfangen und Auswerten von Detektionssignalen der Empfangseinrichtung auf. Außerdem weist die Messvorrichtung eine Kalibrierungseinrichtung zum Kalibrieren der Messvorrichtung auf, die dazu ausgelegt ist, die Messvorrichtung, und insbesondere die Auswerteeinrichtung der Messvorrichtung, basierend auf einer Detektion von unkorrelierter Strahlung, die mit der von der Sendeeinrichtung ausgesendeten modulierten Messstrahlung nicht korreliert, zu kalibrieren.

Ein Grundgedanke hierbei ist, eine Kalibrierung der Messvorrichtung, insbesondere die Auswerteeinrichtung der Messvorrichtung, vor, zwischen oder im Anschluss einer eigentlichen Entfernungsmessung durchzuführen zu können. Im Gegensatz zu der eigentlichen Entfernungsmessung, bei der eine Entfernung mit Hilfe periodisch modulierter Messstrahlung anhand einer Phasenverschiebung zwischen ausgesendeter und detektierter Messstrahlung und einer daraus errechenbaren Flugdauer der Messstrahlung ermittelt werden kann, soll die Kalibrierung mit unkorrelierter, vorzugsweise unmodulierter Strahlung erfolgen. Der Begriff "unkorreliert" soll dabei ausdrücken, dass die für die Kalibrierung verwendete Strahlung hinsichtlich einer von der Empfangseinrichtung detektierten Eigenschaft wie beispielsweise einer Intensität der Strahlung vorzugsweise zeitlich nicht moduliert ist oder zumindest nicht mit einer Modulation, die mit der periodisch arbeitenden Auswerteeinrichtung korreliert, moduliert ist. Mit anderen Worten soll beispielsweise die unkorrelierte Strahlung innerhalb einer Periodendauer, mit der die Sendeeinrichtung während einer normalen Entfernungsmessung die Messstrahlung periodisch moduliert, als im Wesentlichen zeitlich konstant angesehen werden können. Alternativ kann die unkorrelierte Strahlung als hochfrequent modulierte Strahlung erzeugt werden, unter der Bedingung, das diese nicht synchron zum "Binning" der Auswerteeinrichtung läuft, und gegebenenfalls über viele Perioden integriert wird

Als unmodulierte Strahlung kann beispielsweise Hintergrundstrahlung verwendet werden, beispielsweise in Form normalen Umgebungslichts. Solche Hintergrundstrahlung ist per Definition unkorreliert und trifft bei Entfernungsmessungen üblicherweise ohnehin stets auf die Empfangseinrichtung und erzeugt dort ein im Wesentlichen konstantes Hintergrundsignal. Während bei der Entfernungsmessung dieses Hintergrundsignal regelmäßig ignoriert wird und eine Entfernungsmessung sogar erschweren kann, kann nun das Hintergrundsignal aufgrund seiner zeitlich konstanten Eigenschaften im Rahmen eines Kalibrierungsvorganges verwendet werden.

Alternativ kann die Sendeeinrichtung der Messvorrichtung selbst zur Aussendung unkorrelierter, vorzugsweise unmodulierter Messstrahlung ausgelegt sein. Mit anderen Worten kann die Sendeeinrichtung dazu ausgelegt sein, einerseits während einer eigentlichen Entfernungsmessung Messstrahlung periodisch moduliert auszusenden und andererseits während eines Kalibrierungsvorgangs die Modulation gezielt abzuschalten, um Messstrahlung unmoduliert auszusenden. Durch Detektion solcher unmodulierter Messstrahlung kann dann eine gewünschte Kalibrierung erfolgen. Dadurch, dass zusätzlich zu eventuell vorhandener Hintergrundstrahlung auch unmodulierte Strahlung von der Sendeeinrichtung von der Empfangseinrichtung detektiert wird, kann ein von der Empfangseinrichtung detektiertes Messsignal erhöht werden und somit ein Kalibrierungsvorgang beschleunigt werden.

Die für den Kalibrierungsvorgang verwendete Messstrahlung braucht hierbei nicht notwendigerweise die Messvorrichtung nach außen verlassen, wie dies bei der eigentlichen Entfernungsmessung der Fall wäre. Stattdessen kann die Messstrahlung innerhalb der Messvorrichtung direkt auf den Detektor geleitet werden. Hiermit kann beispielsweise ein von Hintergrundstrahlung unabhängiges Messsignal an dem Detektor generiert werden.

Die Messvorrichtung kann dazu ausgelegt sein, dass unmodulierte Strahlung mit einer Intensität auf die Empfangseinrichtung auftrifft, die an eine Detektionsempfindlichkeit der Empfangseinrichtung angepasst ist. Beispielsweise kann die Empfangseinrichtung einen paralysierbaren Strahlungsdetektor wie beispielsweise eine SPAD (Single Photon Avalanche Diode) aufweisen, der bei einer bestimmten auftreffenden Strahlungsintensität ein Maximum einer Detektionsereignisrate als Detektorsignal aufweist. Vorteilhafterweise wird hierbei die unmodulierte Strahlung derart auf die Empfangseinrichtung gelenkt, dass ihre Intensität an das Maximum des Detektorsignals angepasst ist. Sofern als unkorrelierte Strahlung Messstrahlung von der Sendeeinrichtung verwendet wird, kann deren Intensität gezielt durch entsprechendes Ansteuern der Sendeeinrichtung eingestellt werden. Alternativ können in einen Strahlengang der auf die Empfangseinrichtung auftreffenden Strahlung auch entsprechende optische Elemente wie zum Beispiel Absorptionselemente in Form von Blenden oder Filtern integriert werden, um die zu detektierende Strahlung in ihrer Intensität gezielt anpassen zu können.

Die Messvorrichtung kann ferner dazu ausgelegt sein, eine Dauer eines von der Kalibrierungseinrichtung vorzunehmenden Kalibriervorgangs basierend auf einer vorgegebenen Kalibriergenauigkeit sowie einer Intensität der von der Empfangseinrichtung detektierten unmodulierten Strahlung zu bestimmen. Die Kalibriergenauigkeit kann hierbei beispielsweise gerätespezifisch voreingestellt werden oder über eine zugehörige Eingabevorrichtung von einem Anwender vor Durchführung der Kalibrierung vorgegeben werden. Je höher die gewünschte Kalibriergenauigkeit und je geringer die Intensität der detektierten unmodulierten Strahlung ist, desto länger sollte die Dauer des Kalibriervorgangs gewählt werden.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

KURZE BESCHREIBUNG DER FIGUREN

Nachfolgend werden Ausführungsformen der Erfindung und darin enthaltene Teilaspekte mit Bezug auf die beigefügten Figuren beschrieben. Die Figuren sind lediglich schematisch und nicht maßstabsgetreu.

Fig. 1 zeigt eine Messvorrichtung zur optischen Entfernungsmessung gemäß einer Ausführungsform der vorliegenden Erfindung.

Fig. 2 zeigt eine schematische Darstellung von digitalen Gate-Signalen einer Binning-Architektur, wie sie in einer erfindungsgemäßen Messvorrichtung verwendet werden können.

Fig. 3 zeigt beispielhaft eine zeitliche Abhängigkeit einer Zählrate eines als Empfangseinrichtung verwendeten Photonenzählers bei Beleuchtung mit modulierter Messstrahlung.

DETAILIERTE BESCHREIBUNG VON AUSFÜHRUNGSFORMEN

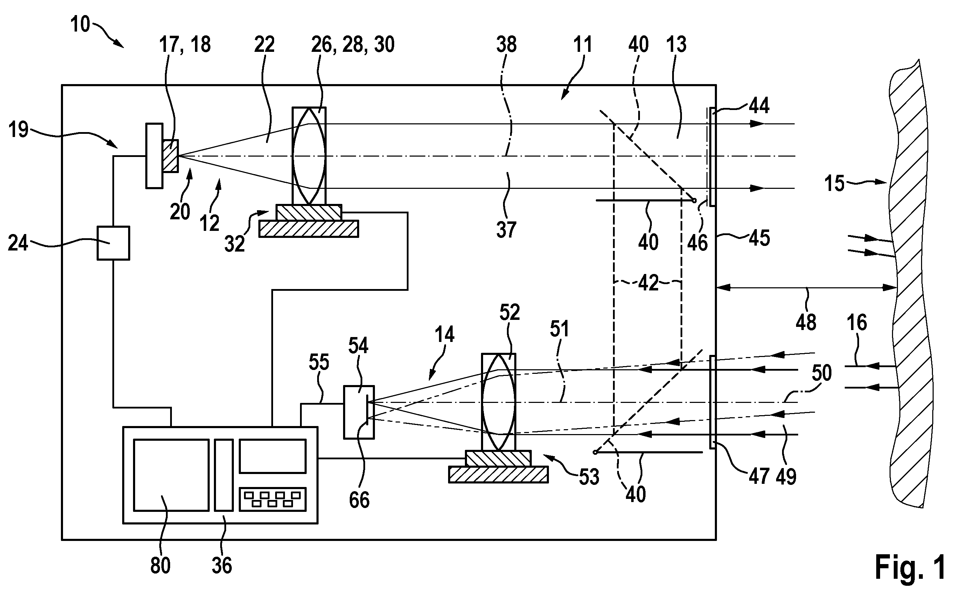

In Fig. 1 ist in schematischer Weise eine erfindungsgemäße Messvorrichtung 10 zur optischen Entfernungsmessung mit den wichtigsten Komponenten zur Beschreibung ihrer Funktion dargestellt.

Die Messvorrichtung 10 weist ein Gehäuse 11 auf, in dem eine Sendeeinrichtung 12 zur Aussendung optischer Messstrahlung 13 sowie eine Empfangseinrichtung 14 zur Detektion von von einem Zielobjekt 15 zurücklaufender Messstrahlung 16 angeordnet sind.

Die Sendeeinrichtung 12 beinhaltet eine Lichtquelle, die im dargestellten Ausführungsbeispiel durch eine Halbleiter-Laserdiode 18 realisiert ist. Die Laserdiode 18 sendet einen Laserstrahl 20 in Form eines für das menschliche Auge sichtbaren Lichtbündels 22 aus. Die Laserdiode 18 wird dazu über ein Steuergerät 24 betrieben, das durch eine entsprechende Elektronik eine zeitliche Modulation eines elektrischen Eingangssignals 19 der Laserdiode 18 erzeugt. Durch eine derartige Modulation des Diodenstromes lässt sich erreichen, dass die optische Messstrahlung 13, welche zur Entfernungsmessung genutzt wird, ebenfalls in gewünschter Weise zeitlich in ihrer Intensität moduliert wird.

Das Steuergerät 24 und die Sendeeinrichtung 12 können dazu ausgelegt sein, unmodulierte Messstrahlung 13 auszusenden, beispielsweise während eines Kalibriervorganges. Hierzu kann das Steuergerät 24 die Laserdiode 18 mit einem konstanten Diodenstrom betreiben. Alternativ kann das Steuergerät 24 die Sendeeinrichtung 12 während des Kalibriervorganges gezielt abschalten, sodass nur noch im Wesentlichen unmodulierte Hintergrundstrahlung auf die Empfangseinrichtung 14 trifft.

Insbesondere während eines Entfernungsmessvorganges durchläuft das Laserstrahlbündel 20 anschließend eine Kollimationsoptik 26 in Form eines Objektivs 28, das in Fig. 1 in vereinfachter Weise in Form einer einzelnen Linse dargestellt ist. Das Objektiv 28 befindet sich in diesem Ausführungsbeispiel optional auf einer Verstellmimik 32, die prinzipiell eine Änderung der Position des Objektivs in allen drei Raumrichtungen, beispielsweise zu Justagezwecken, ermöglicht. Alternativ kann die Kollimationsoptik 26 jedoch auch bereits Bestandteil der Laserdiode 18 sein bzw. fest mit dieser verbunden sein.

Nach Durchlaufen des Objektivs 28 ergibt sich ein beispielsweise Amplitudenmoduliertes Signal der Messstrahlung 13 in Form eines nahezu parallelen Lichtbündels 37, das sich entlang einer optischen Achse 38 der Sendeeinheit 12 ausbreitet.

In der Sendeeinrichtung 12 kann sich zudem noch eine vorzugsweise schaltbare Strahlumlenkung 40 befinden, die es gestattet, die Messstrahlung 13 ganz oder teilweise unter Umgehung des Zielobjektes 15 direkt, das heißt geräteintern, auf die Empfangseinrichtung 14 umzulenken. Auf diese Weise kann eine geräteinterne Referenzstrecke 42 erzeugt werden, die eine Kalibrierung bzw. einen Abgleich der Messvorrichtung gestattet. Die Möglichkeit der geräteinternen Lichtumlenkung kann insbesondere während des Kalibriervorganges mit unmodulierter Messstrahlung eingesetzt werden.

Wird mit der Messvorrichtung 10 eine Entfernungsmessung durchgeführt, verlässt die Messstrahlung 13 das Gehäuse 11 der Messvorrichtung durch ein optisches Fenster 44 in der Stirnwand 45 der Messvorrichtung 10. Die Öffnung des optischen Fensters 44 kann beispielsweise durch einen Shutter 46 gesichert sein. Zur eigentlichen Messung wird die Messvorrichtung 10 dann auf ein Zielobjekt 15 hin ausgerichtet, dessen Entfernung 48 zur Messvorrichtung 10 ermittelt werden soll. Das an dem gewünschten Zielobjekt 15 reflektierte oder gestreute Signal 16 bildet zurücklaufende optische Messstrahlung 16 in Form eines zurücklaufenden Strahlenbündels 49 bzw. 50, das zu einem gewissen Teil wieder in die Messvorrichtung 10 zurückgelangt.

Durch ein Eintrittsfenster 47 an der Stirnseite 45 der Messvorrichtung 10 wird die zurücklaufende Messstrahlung 16 in die Messvorrichtung 10 eingekoppelt und trifft dann, wie in Fig. 1 dargestellt, auf eine Empfangsoptik 52.

In Fig. 1 sind exemplarisch zur Verdeutlichung zwei zurücklaufende Messstrahlenbündel 49 bzw. 50 für zwei unterschiedliche Zielobjektentfernungen 48 eingezeichnet. Für große Objektentfernungen, wobei groß als groß gegenüber der Brennweite der Empfangsoptik 52 interpretiert werden kann, fällt die vom Zielobjekt 15 zurücklaufende optische Messstrahlung 16 annähernd parallel zur optischen Achse 51 der Empfangseinrichtung 14 ein. Dieser Fall ist im Ausführungsbeispiel der Fig. 1 durch das Messstrahlenbündel 49 repräsentiert. Mit kleiner werdender Objektentfernung wird die in die Messvorrichtung einfallende zurücklaufende Messstrahlung 16 aufgrund einer Parallaxe immer mehr gegenüber der optischen Achse 51 der Empfangseinrichtung 14 geneigt. Als Beispiel für ein solches rücklaufendes Messstrahlenbündel im Nahbereich der Messvorrichtung ist in Fig. 1 das Strahlenbündel 50 eingezeichnet.

Die Empfangsoptik 52, die in Fig. 1 ebenfalls nur schematisch durch eine einzelne Linse symbolisiert ist, fokussiert das Strahlenbündel der zurücklaufende Messstrahlung 16 auf die Detektionsfläche 66 eines in der Empfangseinrichtung 14 vorgesehenen Empfangsdetektors 54. Der Detektor 54 weist zur Detektion der optischen Messstrahlung eine Vielzahl von Pixeln auf. Jedes der Pixel weist mindestens eine lichtempfindliche SPAD auf. Durch die in der Detektionsfläche 66 vorgesehenen SPADs, die einzeln oder in Gruppen zusammengefasst in Pixeln Matrix-artig angeordnet und mit einer Auswerteeinrichtung 36 verbunden sind, wird die einfallende zurücklaufende Messstrahlung 16 in ein elektrisches Signal 55 umgewandelt und der weiteren Auswertung in der Auswerteeinrichtung 36 zugeführt. Das elektrische Signal 55 kann dabei aufgrund inhärenter Eigenschaften der SPADs als digitales Signal angesehen werden, das eine Zählrate von auf die jeweiligen Pixel der Detektionsfläche 66 auftreffender Photonen wiedergibt.

Die von einer einzelnen SPAD oder einer Kombination von SPADs generierten Detektionssignale können einer oder mehreren in einer Auswerteeinrichtung 36 enthaltenen Entfernungsbestimmungseinrichtung(en) zugeführt werden. Die Entfernungsbestimmungseinrichtung kann die Detektionssignale aufsummieren und daraus ein Signal erzeugen, das einer zeitabhängigen Intensität des auf die jeweiligen SPADs auftreffenden Lichtsignals bzw. der Lichtintensität entspricht. Indem dieses Signal in Relation zu einem Anregungssignal gesetzt wird, das den zeitlichen Verlauf der von der Sendeeinrichtung 12 emittierten Photonenrate angibt, kann auf eine Photonenflugzeit von der Sendeeinrichtung 12 hin zu dem Zielobjekt 15 und wieder zurück zu der Empfangseinrichtung 13 geschlossen werden. Falls die Sendeeinrichtung 12 das ausgesendete Licht beispielsweise sinusartig periodisch moduliert, kann eine Flugzeit aus einem Phasenunterschied zwischen der ausgesendeten und der detektierten Messstrahlung ermittelt werden.

Im Detail kann die Entfernungsbestimmungseinrichtung die von der Empfangseinrichtung 14 empfangenen digitalen Detektionssignale während verschiedener Unterperioden verschiedenen digitalen Zählern zuleiten. Die Entfernungsbestimmungseinrichtung wird hierin teilweise auch als "Binning-Architektur" bezeichnet und die Unterperioden werden teilweise als "Bin-Breiten" bezeichnet. Die Summe der Unterperioden sollte hierbei der Periode der modulierten Messstrahlung entsprechen. Mit anderen Worten wird während einer Unterperiode ein sich periodisch wiederholender Phasenbereich des periodisch modulierten Detektionssignals erfasst und die entsprechenden digitalen Detektionssignale in Zählern akkumuliert. Hierzu können die Detektionssignale, zeitlich korreliert mit der Periodizität des Ansteuerungssignals an die Laserdiode 18, während der verschiedenen Unterperioden über Multiplexer an entsprechende digitale Zähler geleitet werden. Aus den über viele Perioden kumulierten Zählergebnissen der digitalen Zähler kann dann auf den Phasenunterschied zwischen der ausgesendeten und der detektierten Messstrahlung geschlossen und somit die gewünschte Entfernung bestimmt werden.

Die Auswerteeinrichtung 36 weist ferner eine Kalibriereinrichtung 80 auf. Wie im Anschluss in Details beschrieben, ist die Kalibriereinrichtung dazu ausgelegt, die Messvorrichtung 10 und insbesondere deren Auswerteeinrichtung 36 während eines Kalibriervorganges, bei dem die Detektionseinrichtung mit unmoduliertem Licht beleuchtet wird, zu kalibrieren.

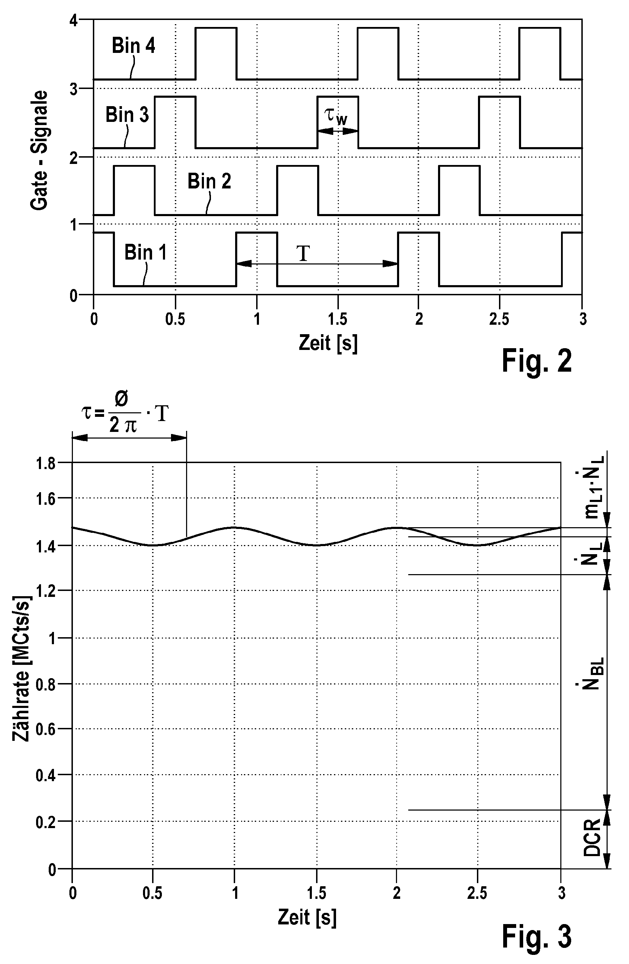

Die Figur 2 zeigt eine schematische Darstellung digitaler Gate-Signale einer Binning-Architektur am Beispiel eines 4-fach-Multiplexers. Die Größe und die Stabilität der tatsächlich realisierten Bin-Breiten kann eine besonders große systematische Fehlerquelle darstellen. Eine Abweichung der Bin-Breiten von ihren Soll-Wert kann sich insbesondere bei starker Hintergrundbeleuchtung erheblich auf das Messergebnis auswirken.

Eine Kalibrierung der Bin-Breiten kann durch eine Messung mit nicht moduliertem Gleichlicht erfolgten. Dabei kann eine derartige Kalibriermessung vor dem Hintergrund einer hohen geforderten Genauigkeit bei einem geringen Signal-Rausch-Verhältnis sehr lange dauern, beispielsweise länger als die eigentliche Entfernungsmessung.

Des Weiteren kann eine unmodulierte Lichterzeugung für die Kalibriermessung durch den nicht modulierten Betrieb der als Sendeeinrichtung 12 dienenden Laserdiode 18 des Messgerätes 10 erfolgen. Die Intensität der Laserdiode 18 kann derart gewählt oder gar geregelt werden, dass der als Empfangseinrichtung 14 dienende paralysierbare Detektor in Form einer SPAD mit einer hohen Zählrate betrieben wird.

Ein Vorteil dieser Art der Kalibrierung mittels nicht modulierter Laserstrahlung kann darin liegen, dass die für die Kalibrierung erforderliche Messzeit bei gleicher Genauigkeit verkürzt werden kann.

Ein weiterer Vorteil kann darin liegen, dass die Kalibrierung vollständig mit bereits vorhandenen Systemkomponenten durchgeführt werden kann. Es wird lediglich das Ausschalten der Laserdioden-Modulation benötigt, was sich sehr leicht realisieren lässt. Somit werden keine zusätzlichen Komponenten benötigt, was eine Kostenersparnis bedeuten kann.

Im Folgenden wird ein Vorteil der Erfindung gemäß einer Ausführungsform anhand eines Beispiels mit kontinuierlich modulierter Laserstrahlung, im Speziellen mit sinusförmiger Modulation, beschrieben. Mit den in Figur 3 gegebenen Bezeichnungen wird die Modulation M auf der Empfangsseite durch

$$(1) \qquad M \equiv \frac{m_{L1} \cdot \dot{N}_L}{\dot{N}_L + \dot{N}_{BL} + DCR}$$

definiert. Hierbei ist $m_{L1}$ ein Faktor der die Modulationstiefe der geräteseitig ausgesandten Laserstrahlung beschreibt, $\dot{N}_L$ ist die zeitlich gemittelte Zählrate (in Counts/s) bezüglich des detektierten Laserlichtes, $N_{BL}$ ist die zeitlich gemittelte Zählrate bezüglich Hintergrundstrahlung und DCR ist eine Dunkelzählrate des Detektors.

Unter typischen Messbedingungen kann die Modulation beispielsweise Werte im Prozent-Bereich annehmen.

Weiter ergibt eine Abschätzung der Fehlerfortpflanzung des Bin-Breiten-Fehlers $\delta\tau_w$ auf den Phasenfehler $\Delta\phi$ folgenden Zusammenhang:

$$(2) \qquad \Delta\phi \propto \frac{1}{M} \cdot \frac{\delta\tau_w}{T}$$

wobei T die Periode der modulierten Messstrahlung wiedergibt.

Der Phasenfehler ist antiproportional zur Modulation des unter Messbedingungen empfangenen Signals und proportional zur relativen Genauigkeit der Bin-Breite bezogen auf die Modulationsperiode. Damit wird die hohe Sensitivität des Systems auf Abweichungen der Bin-Breiten vom Sollwert deutlich: Bei starker Hintergrundbeleuchtung erfordert eine gleichbleibende Phasengenauigkeit eine höhere Genauigkeit bei der Bin-Breiten-Kalibrierung.

Erfolgt die Kalibrier-Messung wie vorgeschlagen mit unmoduliertem Gleichlicht, dann ergeben sich nach einer gewissen Messzeit Zählerstände, die direkt proportional zu den effektiven Bin-Breiten sind. Somit lässt sich eine Kalibrierung der Bin-Breiten durchführen. Unter der Annahme, dass die Zählereignisse Poissonverteilt sind, ergibt sich für die zur Kalibrierung benötigte Messzeit:

$$(3) \qquad t \propto \frac{1}{\Delta\phi^2} \cdot \frac{1}{M^2 \cdot \dot{N}_{DC}}$$

Dabei ist $\Delta\phi$ die Unsicherheit der Phase, die mit Kalibrierung noch toleriert wird, $M$ die unter Messbedingung

erreichbare Modulation und $\dot{N}_{DC}$ die bei der Kalibriermessung verwendete Zählrate.

Wird die nicht modulierte Laserstrahlung für die Kalibriermessung verwendet, so ergibt sich gegenüber der Messung ohne Laser eine relative Zeitersparnis von:

$$(4) \qquad \eta \equiv \frac{\text{benötigte Kalibriermesszeit mit Laser}}{\text{benötigte Kalibriermesszeit ohne Laser}} = \frac{\dot{N}_{BL} + \text{DCR}}{\dot{N}_L + \dot{N}_{BL} + \text{DCR}}$$

Die Zeitersparnis ist umso größer, je geringer der Hintergrundbeleuchtungsanteil ist.

## Patentansprüche

1. Messvorrichtung (10) zur optischen Entfernungsmessung, insbesondere handgehaltene Messvorrichtung, aufweisend:

   eine Sendeeinrichtung (12) zur Aussendung periodisch modulierter optischer Messstrahlung (13) auf ein Zielobjekt (15) hin, wobei eine Periode der periodisch modulierten Messstrahlung in eine Mehrzahl von Unterperioden unterteilt ist;
   eine Empfangseinrichtung (14) zur Detektion von von dem Zielobjekt (15) zurücklaufender optischer Messstrahlung (16); und
   eine Auswerteeinrichtung (36) zum Empfangen und Auswerten von Detektionssignalen der Empfangseinrichtung (14), die dazu ausgelegt ist, ein von der Empfangseinrichtung (12) empfangenes Detektionssignal über vorbestimmte Unterperioden zu kumulieren;
   eine Kalibriereinrichtung (80) zum Kalibrieren der Messvorrichtung (10);

   wobei die Kalibriereinrichtung (80) dazu ausgelegt ist, die Messvorrichtung (10) basierend auf einer Detektion von unkorrelierter Strahlung, die mit der von der Sendeeinrichtung ausgesendeten modulierten Messstrahlung nicht korreliert, zu kalibrieren, und eine Länge der Unterperioden basierend auf einer Detektion von unmodulierter Strahlung zu kalibrieren.

2. Messvorrichtung nach Anspruch 1,
   wobei die Kalibriereinrichtung (80) dazu ausgelegt ist, die Messvorrichtung (10) basierend auf einer Detektion von unmodulierter Strahlung zu kalibrieren.

3. Messvorrichtung nach Anspruch 1 oder 2,
   wobei die Kalibriereinrichtung (80) dazu ausgelegt ist, die Messvorrichtung (10) basierend auf einer Detektion von Hintergrundstrahlung zu kalibrieren.

4. Messvorrichtung nach einem der Ansprüche 1 bis 3,
   wobei die Sendeeinrichtung (12) ferner zur Aussendung von unkorrelierter Messstrahlung ausgelegt ist;
   wobei die Kalibriereinrichtung (80) dazu ausgelegt ist, die Messvorrichtung (10) basierend auf einer Detektion von unkorrelierter Messstrahlung zu kalibrieren.

5. Messvorrichtung nach Anspruch 4,
   wobei die Messvorrichtung (10) dazu ausgelegt ist, Messstrahlung innerhalb der Messvorrichtung auf die Empfangseinrichtung (14) zu leiten.

6. Messvorrichtung nach einem der Ansprüche 1 bis 5,
   wobei die Messvorrichtung (10) dazu ausgelegt ist, dass unkorrelierte Strahlung mit einer Intensität auf die Empfangseinrichtung (14) auftrifft, die an eine Detektionsempfindlichkeit der Empfangseinrichtung (14) angepasst ist.

7. Messvorrichtung nach Anspruch 6,
   wobei die Empfangseinrichtung (14) einen paralysierbaren Strahlungsdetektor aufweist, und
   wobei die unmodulierte Strahlung mit einer Intensität auf die Empfangseinrichtung (14) geleitet wird, die an ein Maximum eines Detektorsignals, insbesondere einer maximalen Detektionsereignisrate des paralysierbaren Strahlungsdetektors angepasst ist.

EP 2 486 370 B1

**8.** Messvorrichtung nach einem der Ansprüche 1 bis 7,
wobei die Empfangseinrichtung (14) wenigstens eine SPAD aufweist.

**9.** Messvorrichtung nach einem der Ansprüche 1 bis 8,
wobei die Messvorrichtung (10) dazu ausgelegt ist, eine Dauer eines von der Kalibriereinrichtung (80) vorzunehmenden Kalibriervorgangs basierend auf einer vorgegebenen Kalibriergenauigkeit sowie einer Intensität des von der Empfangseinrichtung detektierten unmodulierten Strahlung zu bestimmen.

**Claims**

**1.** Measuring device (10) for optical distance measurement, in particular handheld measuring device, comprising:

a transmitting unit (12) for emitting periodically modulated optical measurement radiation (13) toward a target object (15), wherein a period of the periodically modulated measurement radiation is subdivided into a plurality of subperiods;
a receiving unit (14) for detecting optical measurement radiation (16) returning from the target object (15); and
an evaluation unit (36) for receiving and evaluating detection signals of the receiving unit (14), which evaluation unit is designed to cumulate a detection signal received by the receiving unit (12) over predetermined subperiods;
a calibration unit (80) for calibrating the measuring device (10);

wherein the calibration unit (80) is designed to calibrate the measuring device (10) on the basis of a detection of uncorrelated radiation which does not correlate with the modulated measurement radiation emitted by the transmitting unit, and to calibrate a length of the subperiods on the basis of a detection of unmodulated radiation.

**2.** Measuring device according to Claim 1,
wherein the calibration unit (80) is designed to calibrate the measuring device (10) on the basis of a detection of unmodulated radiation.

**3.** Measuring device according to Claim 1 or 2,
wherein the calibration unit (80) is designed to calibrate the measuring device (10) on the basis of a detection of background radiation.

**4.** Measuring device according to any of Claims 1 to 3,
wherein the transmitting unit (12) is furthermore designed for emitting uncorrelated measurement radiation;
wherein the calibration unit (80) is designed to calibrate the measuring device (10) on the basis of a detection of uncorrelated measurement radiation.

**5.** Measuring device according to Claim 4,
wherein the measuring device (10) is designed to guide measurement radiation within the measuring device onto the receiving unit (14).

**6.** Measuring device according to any of Claims 1 to 5,
wherein the measuring device (10) is designed to the effect that uncorrelated radiation impinges on the receiving unit (14) with an intensity adapted to a detection sensitivity of the receiving unit (14).

**7.** Measuring device according to Claim 6,
wherein the receiving unit (14) has a paralyzable radiation detector, and
wherein the unmodulated radiation is guided onto the receiving unit (14) with an intensity adapted to a maximum of a detector signal, in particular a maximum detection event rate of the paralyzable radiation detector.

**8.** Measuring device according to any of Claims 1 to 7,
wherein the receiving unit (14) has at least one SPAD.

**9.** Measuring device according to any of Claims 1 to 8,
wherein the measuring device (10) is designed to determine a duration of a calibration process to be performed by the calibration unit (80) on the basis of a predefined calibration accuracy and an intensity of the unmodulated radiation detected by the receiving unit.

**Revendications**

1. Dispositif de mesure (10) pour la mesure optique de distance, en particulier dispositif de mesure portatif, présentant :

   un dispositif d'émission (12) pour l'émission d'un rayonnement de mesure optique (13) modulé périodiquement vers un objet cible (15), dans lequel une période du rayonnement de mesure modulé périodiquement est divisée en une pluralité de sous-périodes ;
   un dispositif de réception (14) pour la détection d'un rayonnement de mesure optique (16) revenant de l'objet cible (15) ; et
   un dispositif d'analyse (36) pour réceptionner et analyser des signaux de détection du dispositif de réception (14), lequel est étudié pour cumuler un signal de détection réceptionné par le dispositif d'émission (12) sur des sous-périodes prédéterminées ;
   un dispositif d'étalonnage (80) pour étalonner le dispositif de mesure (10) ;

   dans lequel le dispositif d'étalonnage (80) est étudié pour étalonner le dispositif de mesure (10) sur la base d'une détection d'un rayonnement non corrélé, lequel n'est pas en corrélation avec le rayonnement de mesure modulé émis par le dispositif d'émission, et pour étalonner une longueur des sous-périodes sur la base d'une détection d'un rayonnement non modulé.

2. Dispositif de mesure selon la revendication 1,
   dans lequel le dispositif d'étalonnage (80) est étudié pour étalonner le dispositif de mesure (10) sur la base d'une détection d'un rayonnement non modulé.

3. Dispositif de mesure selon la revendication 1 ou 2,
   dans lequel le dispositif d'étalonnage (80) est étudié pour étalonner le dispositif de mesure (10) sur la base d'une détection d'un rayonnement de fond.

4. Dispositif de mesure selon l'une des revendications 1 à 3,
   dans lequel le dispositif d'émission (12) est en outre étudié pour l'émission d'un rayonnement de mesure non corrélé ;
   dans lequel le dispositif d'étalonnage (80) est étudié pour étalonner le dispositif de mesure (10) sur la base d'une détection d'un rayonnement de mesure non corrélé.

5. Dispositif de mesure selon la revendication 4,
   dans lequel le dispositif de mesure (10) est étudié pour guider le rayonnement de mesure à l'intérieur du dispositif de mesure vers le dispositif de réception (14).

6. Dispositif de mesure selon l'une des revendications 1 à 5,
   dans lequel le dispositif de mesure (10) est étudié pour qu'un rayonnement non corrélé soit incident sur le dispositif de réception (14) avec une intensité qui est adaptée à une sensibilité de détection du dispositif de récection (14).

7. Dispositif de mesure selon la revendication 6,
   dans lequel le dispositif de réception (14) présente un détecteur de rayonnement paralysable, et
   dans lequel le rayonnement non modulé est guidé sur le dispositif de réception (14) avec une intensité qui est adaptée à un maximum d'un signal de détection, en particulier un taux d'évènements de détection maximal du détecteur de rayonnement paralysable.

8. Dispositif de mesure selon l'une des revendications 1 à 7,
   dans lequel le dispositif de réception (14) présente au moins une SPAD.

9. Dispositif de mesure selon l'une des revendications 1 à 8,
   dans lequel le dispositif de mesure (10) est étudié pour déterminer une durée d'un processus d'étalonnage à réaliser par le dispositif d'étalonnage (80) sur la base d'une précision d'étalonnage prescrite ainsi que d'une intensité du rayonnement non modulé détectée par le dispositif de réception.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070182949 A1
- US 7486386 B1